# EUROPÄISCHE PATENTSCHRIFT

(11) **EP 2 038 573 B1**
(45) Veröffentlichungstag und Bekanntmachung des Hinweises auf die Patenterteilung: **16.06.2010**
(21) Anmeldenummer: 07726017.2
(22) Anmeldetag: 14.06.2007
(51) Int. Cl.: F16L 33/207

(54) **ROHRVERBINDUNG**
PIPE CONNECTION
RACCORD DE TUYAUTERIE

(30) Priorität: 30.06.2006 DE 102006030777
(43) Veröffentlichungstag der Anmeldung: 25.03.2009
(73) Patentinhaber: REHAU AG + Co, 95111 Rehau (DE)
(72) Erfinder: EMMERICH, Christopher, 91054 Erlangen (DE); SAPPER, Richard, 91126 Schwabach (DE); HABENICHT, Frank, 91301 Forchheim (DE)
(86) Internationale Anmeldenummer: PCT/EP2007/005253
(87) Internationale Veröffentlichungsnummer: WO 2008/000357

(56) Entgegenhaltungen:
- EP-A- 1 498 653
- EP-A- 1 653 142
- DE-U1- 29 901 935

## Beschreibung

Die Erfindung betrifft eine Rohrverbindung nach dem Oberbegriff des Anspruchs 1.

Eine derartige Rohrverbindung ist bekannt aus der DE 299 01 935 UI. Dort weist der Anschlussstutzen eine umlaufende schräge Anlagewand auf, deren Winkel an den Winkel der Fasenwand so angepasst ist, dass das Rohr auf die Anlagewand aufschiebbar ist. Beim Verarbeiten vorkonfektionierter Rohrlängen kommt es mit diesem bekannten Rohrverbinder oft zum Problem, dass die vorkonfektionierte Länge des Rohrs zu kurz ist.

Es ist daher eine Aufgabe der vorliegenden Erfindung, eine Rohrverbindung der eingangs genannten Art derart weiterzubilden, dass Vorkonfektionierungsprobleme verringert werden.

Diese Aufgabe ist erfindungsgemäß gelöst durch eine Rohrverbindung mit den im Kennzeichnungsteil des Anspruchs 1 angegebenen Merkmalen.

Erfindungsgemäß wurde erkannt, dass es, einen entsprechende Material- und Winkelwahl vorausgesetzt, ohne Weiteres möglich ist, eine Rohrverbindung so auszulegen, dass die innere Fasenkante des Rohrs linienhaft an der Anlagewand anliegt. Da der Anlagewand-Winkel erheblich größer ist als der Fasenwand-Winkel, kommt es zu keinem Aufschieben des Rohrs auf die Anlagewand, sodass die axiale Positionierung des Rohrs am Anschlussstutzen durch den Anschlag an der Anlagewand exakt definiert ist. Fehlkonfektionierungen können so sicher vermieden werden. Durch die linienhafte Anlage an der Fasenkante der Innenlage des Rohrs ist bei einer Ausführung des Rohrs als Metall-Kunststoff-Verbundrohr zudem sicher verhindert, dass der Anschlussstutzen direkt mit einer Metalllage des Rohrs in Kontakt kommt. Erfindungsgemäß wurde insbesondere erkannt, dass es auch dann, wenn die Innenlage des Rohrs eine Fasenwand aufweist, möglich ist, durch Vorgabe einer Winkelpaarung aus Fasenwand-Winkel einerseits und Anlagewand-Winkel andererseits eine linienförmige Berührung des Rohrs an der Anlagewand des Anschlussstutzens zu gewährleisten.

Winkelvariationen nach den Ansprüchen 2 und 3 haben sich zur unaufwändigen Herstellung des Rohrs einerseits und des Anschlussstutzens andererseits als günstig herausgestellt.

Winkelunterschiede nach Anspruch 4 erlauben große Freiheitsgrade bei der Materialwahl der Innenlage des Rohrs und des Anschlussstutzens.

Ein Winkelunterschied nach Anspruch 5 hat sich dabei als besonders günstig herausgestellt.

Eine Innenlage nach Anspruch 6 ist kostengünstig herstellbar. Alternativ kann die Innenlage auch aus vernetztem Kunststoff sein.

Eine Anlagewand mit einer radial äußeren Umfangswulst nach Anspruch 7 führt zu einer Anlagewand mit einer vorteilhaften Doppelfunktion. Zum einen dient die Anlagewand als Anschlag für das Rohr. Zum anderen ermöglicht die Anlagewand die Montage des Kunststoff-Halterings.

Ausführungsbeispiele der Erfindung werden nachfolgend anhand der Zeichnung näher erläutert. In dieser zeigen:
- Fig. 1: eine perspektivische Ansicht einer Fitting- Montagebaugruppe, wobei von einem Metall-Kunststoff- Verbundrohr nur der Abschnitt dargestellt ist, der in ein An- schlussfitting eingeschoben ist, mit einer Pressbacke einer Presszange in einer Pressstellung bei noch unverpresster Presshülse und noch unverpresstem Metall-Kunststoff- Verbundrohr;
- Fig. 2: einen axialen Längsschnitt durch die Fitting- Montagebaugruppe nach Fig. 1;
- Fig. 2a: die Fitting-Montagebaugruppe in einer zu Fig. 2 ähnlichen Darstellung mit der Pressbacke in Pressstellung bei verpress- ter Presshülse und verpresstem Metall-Kunststoff- Verbundrohr;
- Fig. 3: vergrößert ein Detail III in Fig. 2;
- Fig. 4: vergrößert ein Detail IV in Fig. 2;
- Fig. 5: perspektivisch eine Presshülse des Anschlussfittings;
- Fig. 6: eine seitliche Ansicht der hälftig dargestellten Presshülse nach Fig. 5;
- Fig. 7: ein Schnitt gemäß Linie VII-VII in Fig. 6;
- Fig. 8: einen zu Fig. 2 ähnlichen Schnitt einer weiteren Ausführungs- form einer Fitting-Montagebaugruppe;
- Fig. 9: vergrößert ein Detail IX in Fig. 8;
- Fig. 10: vergrößert eine Seitenansicht einer der zwei Pressbacken ei- ner ansonsten nicht dargestellten Presszange mit Blickrich- tung in Längsrichtung der Fitting-Montagebaugruppe; und
- Fig. 11: eine perspektivische Ansicht der Pressbacke nach Fig. 10.

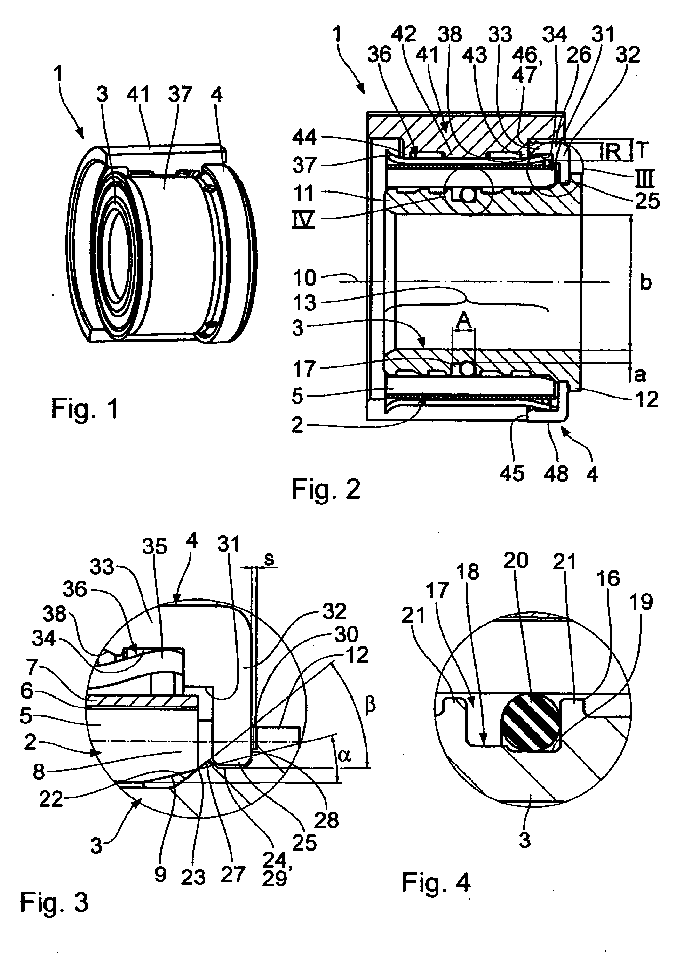

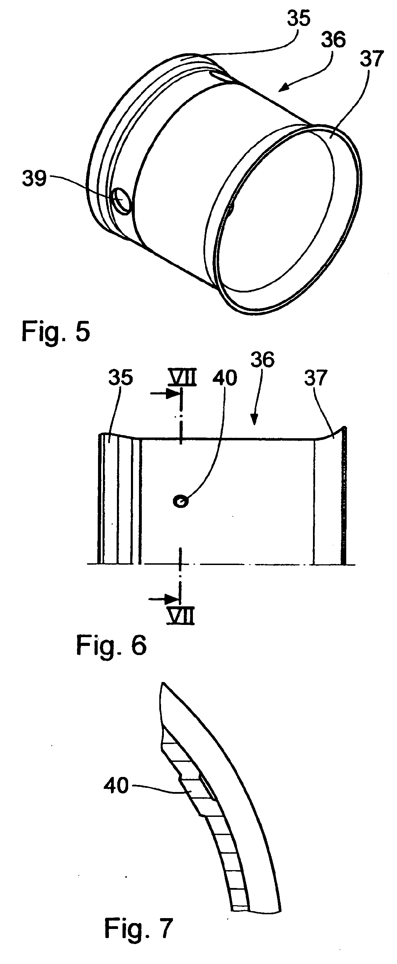

Mit Hilfe einer Fitting-Montagebaugruppe 1, von der die Fig. 1 bis 7 eine erste Ausführung zeigen, wird ein sicherer und insbesondere druckdichter Anschluss eines Metall-Kunststoff-Verbund-(MKV-)Rohrs 2 mit einem Anschlussstutzen 3 eines insgesamt mit 4 bezeichneten Anschlussfittings gewährleistet. Das MKV-Rohr 2 bildet zusammen mit dem AnschlussFitting 4 eine Rohrverbindung. Das MKV-Rohr 2 ist in der Zeichnung nur im Bereich eines Abschnitts dargestellt, der in das Anschlussfitting 4 eingeschoben ist. Anstelle eines MKV-Rohrs 2 kann auch ein anderer Rohrtyp eingesetzt sein, insbesondere ein Vollkunststoffrohr, welches aus einer einzigen Schicht bestehen oder mehrschichtig aufgebaut sein kann. Im Falle eines mehrschichtigen Vollkunststoffrohrs können die einzelnen Schichten über geeignete Kleberschichten miteinander verbunden sein.

Auf der in der Zeichnung nicht dargestellten Seite des Umfangsbunds 12 kann das Anschlussfitting 4 beispielsweise spiegelsymmetrisch fortgesetzt sein, so dass ein 180-1:1-Rohrverbinder vorliegt. Der Anschlussstutzen 3 kann auch andere Fortsetzungsvarianten haben, so dass zum Beispiel ein 90°-Eckverbinder, ein T-Stück, ein Gewindeanschluss oder dergleichen entsteht.

Das MKV-Rohr 2 ist dreilagig. Eine Innenlage 5 des MKV-Rohrs 2, deren Wandstärke den größten Teil der gesamten Wandstärke des MKV-Rohrs 2 ausmacht, ist aus unvernetztem Kunststoff. Die Innenlage 5 kann alternativ auch aus vernetztem Kunststoff sein. Die Innenlage 5 ist umgeben von einer Metalllage 6, die zum Beispiel aus Aluminium bestehen kann. Außen ist die Metalllage 6 überzogen von einer dünnen Decklage 7, die ebenfalls aus Kunststoff ist. Die Decklage 7 dient dem Schutz der Metalllage 6. Die einzelnen Lagen 5 bis 7 sind durch geeignete Kleberschichten miteinander verbunden. Das MKV-Rohr 2 hat bei der dargestellten Ausführungsform einen Außendurchmesser von 32 mm. Andere Ausführungsformen können andere Außendurchmesser, zum Beispiel 16, 20 oder 25 mm aufweisen.

An einem führenden, auf den Anschlussstutzen 3 aufgeschobenen Ende 8 hat das MKV-Rohr 2 eine innen umlaufende konische Fasenwand 9. Letztere schließt mit einer Längsachse 10 des MKV-Rohrs 2 im Bereich des Endes 8 einen Winkel von etwa 15° ein. Auch andere Fasenwand-Winkel α im Bereich zwischen 5° und 20° sind möglich.

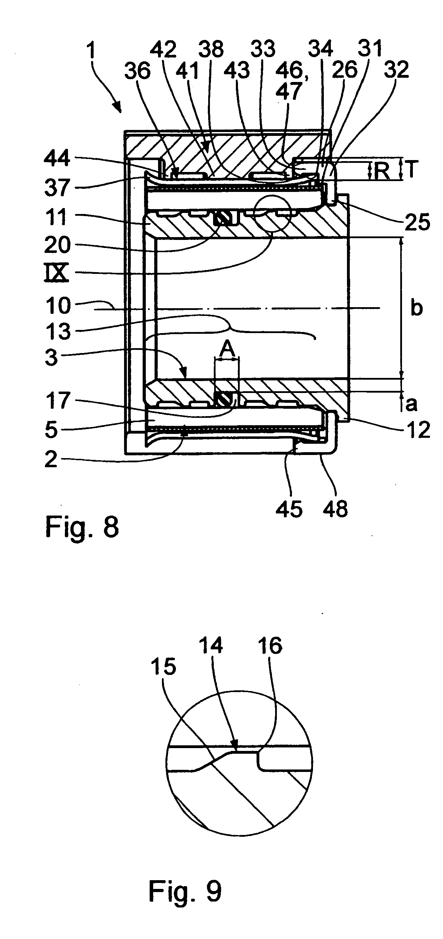

Der Anschlussstutzen 3 ist aus Metall, insbesondere aus Messing. Der Anschlussstutzen kann alternativ auch aus Kunststoff gefertigt sein, insbesondere mittels Spritzguss. Der Anschlussstutzen 3 ist in der Zeichnung von einem freien Einlaufende 11 bis zu einem einlauffernen Umfangsbund 12 dargestellt. In einem Einlaufabschnitt 13, der beim Einlaufende 11 beginnt und benachbart zum Umfangsbund 12 endet, hat der Anschlussstutzen 3 einen Außendurchmesser, der etwas geringer ist als der Innendurchmesser des MKV-Rohrs 2 im unverpressten Zustand. In dem Einlaufabschnitt 13 hat der Anschlussstutzen 3 mehrere äußere Umfangsrippen 14, von denen im Detail eine in der Fig. 9 dargestellt ist. Die Umfangsrippen 14 der Ausführung nach den Fig. 1 bis 7 sind genauso aufgebaut wie die in der Fig. 9 dargestellte Umfangsrippe 14. Einlaufseitig weisen die Umfangsrippen 14 eine Einlauframpe 15 zur Erleichterung des Aufschiebens des MKV-Rohrs 2 auf. Gegenüberliegend zur Einlauframpe 15 haben die Umfangsrippen 14 jeweils eine scharf um 90° abgewinkelte Rippenkante 16.

In etwa mittig im Einlaufabschnitt 13 weist der Anschlussstutzen 3 eine umlaufende Aufnahmenut 17 mit einer Axialerstreckung A auf. In einem Nutgrund 18 der Aufnahmenut 17 ist ein gegenüber dem sonstigen Nutgrund 18 abgesenkter umlaufender Aufnahmeabschnitt 19 ausgeführt. In dem Aufnahmeabschnitt 19 ist ein in die Aufnahmenut 17 eingelegter O-Dichtring 20 gehalten. Die Axialerstreckung A der Aufnahmenut ist in etwa doppelt, insbesondere 1,7 mal, so groß wie der Durchmesser des Dichtrings 20. Der Außendurchmesser des Aufnahmeabschnitts 19 ist geringfügig größer als der Innendurchmesser des O-Dichtrings 20, so dass der O-Dichtring 20 satt im Aufnahmeabschnitt 19 am Anschlussstutzen 3 anliegt. Der Außendurchmesser des sonstigen Nutgrunds 18 ist deutlich größer als der Außendurchmesser des Aufnahmeabschnitts 19 und der Innendurchmesser des O-Dichtrings 20, so dass ein Verschieben des O-Dichtrings 20 in der Aufnahmenut 17 auch bei Vorliegen einer zum sonstigen Nutgrund gerichteten Axialkraft auf den O-Dichtring 20 kaum möglich ist.

Alternativ zu einem abgestuften Nutgrund 18 wie bei der Ausführung nach Fig. 4 ist es möglich, den Nutgrund konisch so auszuführen, dass der Durchmesser der Nut zum Anschlagbund 12 hin geringer wird. Der O-Dichtring 20 hat einen Innendurchmesser, der dem geringsten Außendurchmesser eines derart sich konisch verjüngenden Nutgrundes entspricht. Der sich in Richtung auf das Einlaufende 11 hin vergrößernde Umfang eines derartigen konischen Nutgrundes ist deutlich größer als der Innendurchmesser des O-Dichtrings 20, so dass der O-Dichtring in der Aufnahmenut 17 einlauffern gehalten ist.

Die Aufnahmenut 17 ist axial beidseitig begrenzt von Aufnahmerippen 21, deren Außendurchmesser so groß ist wie der Außendurchmesser der Umfangsrippen 14. Die einlaufferne Aufnahmerippe 21 hat wie die Umfangsrippen 14 ebenfalls eine Rippenkante 16.

Der Aufnahmeabschnitt 19 ist in einem vom Einlaufende 11 abgewandten Bereich des Nutgrunds 18 der Aufnahmenut 17 ausgeführt. Die axiale Erstreckung des Aufnahmeabschnitts 19 ist etwa so groß wie der Durchmesser des Dichtrings 20 und in etwa halb so groß wie die Axialerstreckung A der Aufnahmenut 17. Das Verhältnis zwischen einer minimalen Materialstärke a des Anschlussstutzens 3, die axial im Bereich des Aufnahmeabschnitts 19 vorliegt, und einem Innendurchmesser b des Anschlussstutzens 3 beträgt etwa 1:10. Bei Varianten der Fitting-Montagebaugruppe 1 liegt dieses Verhältnis zwischen 1:10 und 2:10.

Zwischen dem Einlaufabschnitt 13 und dem Umfangsbund 12 hat der Anschlussstutzen 3 einen als schräge, konische Anlagewand 22 ausgeführten Anschlagbund für das MKV-Rohr 2. Die Anlagewand 22 schließt mit einer Längsachse des Anschlussstutzens 3, die im Einlaufabschnitt 13 mit der Längsachse 10 des MKV-Rohrs 2 zusammenfällt, einen Winkel β von etwa 40° ein. Auch andere Winkel der Anlagewand 22 zur Längsachse 10 im Bereich zwischen 30° und 60° sind möglich.

Der Unterschied zwischen den Winkeln α und β beträgt bei den dargestellten Ausführungsformen etwas 25°. Auch andere Winkelunterschiede zwischen 15° und 35° sind möglich.

Die Materialien für die Innenlage 5 des MKV-Rohrs 2 und dem Anschlussstutzen 3 sowie die beiden Winkel α, β sind so aufeinander abgestimmt, dass eine innere, stirnseitige Fasenkante 23 der Innenlage 5 des MKV-Rohrs 2 linienförmig umlaufend an die Anlagewand 22 anliegt. Es liegt also kein flächiger Kontakt zwischen der Innenlage 5 und der Anlagewand 22 vor.

Zwischen der Anlagewand 22 und dem Umfangsbund 12 hat der Anschlussstutzen 3 eine außen umlaufende Rastnut 24, in der ein innerer Rastbund 25 eines Kunststoff-Halterings 26 aufgenommen ist. Zwischen dem stirnseitigen Ende 8 des MKV-Rohrs 2 und dem Rastbund 25 verbleibt ein Spalt. Das MKV-Rohr 2 liegt also nicht am Kunststoff-Haltering 26 an.

Die Rastnut 24 ist zur Anlagewand 22 hin begrenzt von einer Umfangswulst 27, über die der Kunststoff-Haltering 26 beim Aufrasten auf den Anschlussstutzen 3 aufgeschoben ist. Gegenüberliegend wird die Rastnut 24 begrenzt von einer umlaufenden Anschlagswand 28 des Umfangsbunds 12, an der der Kunststoff-Haltering 26 beim Aufrasten anschlägt. Von einem Nutgrund 29 der Rastnut 24 aus springt ein radial äußerer Abschnitt der Anschlagswand 28 über eine Stufe 30 axial zurück, so dass im zurückspringenden Bereich die Rastnut 24 verbreitert ist. Bei verrastetem Kunststoff-Haltering 26 verbleibt zwischen dem Kunststoff-Haltering 26 und dem zurückspringenden Abschnitt der Anschlagswand 28 ein Spalt s. Bei einer alternativen Ausgestaltung des Anschlussstutzens 3 liegt der stufenweise Rücksprung der Anschlagswand 28 über die Stufe 30 nicht vollumfänglich, sondern in Umfangsabschnitten vor. Zwischen diesen Umfangsabschnitten ist der Nutgrund 29 der Rastnut 24 generell um die Spaltweite s verbreitert. Es können insbesondere fünf Rücksprungs-Umfangsabschnitte mit einer Umfangserstreckung von jeweils 40° vorliegen, zwischen denen Zwischenräume mit bis zum Nutgrund 29 durchgehenden Spalt s mit einer Umfangserstreckung von je 32° liegen. Durch diese Variante der Ausgestaltung des Anschlussstutzens 3 mit abschnittsweisem Rücksprung über die Stufe 30 wird gegenüber einem vollumlaufenden Rücksprung Material eingespart. Dies ist insbesondere dann von Vorteil, wenn der Anschlussstutzen aus Kunststoff gefertigt ist, besonders wenn dies durch Spritzguss erfolgt.

Der Kunststoff-Haltering 26 hat einen im Wesentlichen L-förmigen Querschnitt, wobei das Verhältnis zwischen der Axialerstreckung und der Radialerstreckung des Kunststoff-Halterings 26 Werte zwischen 0,9 und 1,2 haben kann.

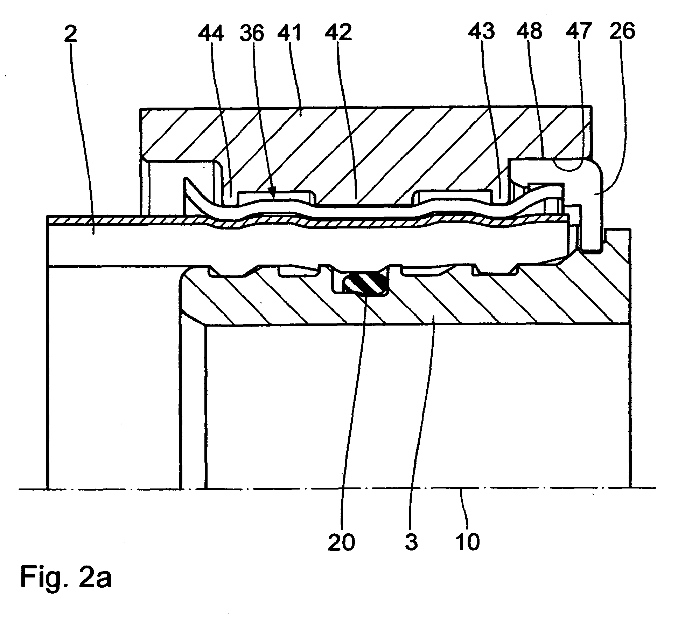

Nach radial außen hin verbreitert sich der Rastbund 25 des Kunststoff-Halterings 26 zunächst über eine Stufe 31. Diese Erweiterung über die Stufe 31 kann bei einer ersten, nicht dargestellten Variante vollumlaufend um die Haltering-Symmetrieachse 10 ausgeführt sein. Bei der in der Fig. 2 dargestellten Ausführung des Halterings 26 ist die Stufe 31 in fünf Umfangsabschnitten des Halterings 26 ausgeführt. Der in der Fig. 2 in der oberen Hälfte geführte Schnitt durch den Haltering 26 erfolgt durch einen derartigen Umfangsabschnitt. Der untere Schnitt ist in einer Ebene zwischen zwei derartigen Umfangsabschnitten geführt, wobei eine Stirnwand des Umfangsabschnitts zu sehen ist. Die Umfangsabschnitte erstrecken sich um die Haltering-Symmetrieachse 10 über einem Winkelbereich von 40°. Dementsprechend haben die Zwischenräume zwischen zwei Umfangsabschnitten in Umfangsrichtung die Ring-Symmetrieachse 10 eine Umfangserstreckung von 32°. Ein solcherart axial verbreiterter Abschnitt 32 geht zur Vervollständigung des L-förmigen Querschnitts des Halterings 26 in einen um 90° umgebogenen Hülsen-Rastabschnitt 33 des Kunststoff-Halterings 26 über. Axial überlappt der Hülsen-Rastabschnitt 33 bereichsweise mit dem Einlaufabschnitt 13 des Anschlussstutzens 3. Der Hülsen-Rastabschnitt 33 begrenzt eine Rastnut 34 zur rastenden Aufnahme eines im Durchmesser aufgeweiteten, einlauffernen Bördelabschnitts 35 einer Presshülse 36 des Anschlussfittings 4. Der Kunststoff-Haltering 26 steht im Bereich des Hülsen-Rastabschnitts 33 radial über die Presshülse 36 über. Der einlaufferne Bördelabschnitt 35 ist dabei im Wesentlichen spielfrei in der Rastnut 34 aufgenommen, so dass, abgesehen von einer herstellungsbedingten und unvermeidlichen Toleranz, ein Verkippen der Presshülse 36 relativ zum Kunststoff-Haltering 26 und damit zum Anschlussstutzen 3 praktisch nicht möglich ist.

Die Presshülse 36 überdeckt axial den gesamten Einlaufabschnitt 13 des Anschlussstutzens 3 und hat, abgesehen vom bundseitigen, also einlauffernen Bördelabschnitt 35 und von einem gegenüberliegenden, also einlaufseitigen Bördelabschnitt 37 einen Innendurchmesser, der geringfügig größer ist als der Außendurchmesser des MKV-Rohrs 2. Der bundseitige Bördelabschnitt 35 läuft in einer flachen Wulst aus, während der einlaufseitige Bördelabschnitt 37 in einer Kante ausläuft. Zur Erleichterung des Einrastens der Presshülse 36 in die Rastnut 34 hat der Hülsen-Rastabschnitt 33 eine führende Einlauffase 38.

Benachbart zum bundseitigen Bördelabschnitt 35 hat die Presshülse 36 drei Sichtlöcher 39. Axial leicht zur Einlaufseite gegenüber den Sichtlöchern 39 versetzt, aber immer noch bundseitig, weist die Presshülse 36 drei Körnungen 40 auf. In Umfangsrichtung um die Presshülse 36 liegen die Körnungen 40 jeweils zwischen zwei benachbarten Sichtlöchern 39. Am Ort der Körnungen 40 ist der Innendurchmesser der Presshülse 36 um etwa 0,2 mm verringert. Bei Varianten der Körnungen beträgt die Innendurchmesserverringerung zwischen 0,1 und 0,25 mm.

Die Fig. 1 und 2 zeigen das Anschlussfitting 4 in noch unverpresstem Zustand der Presshülse 36, wobei eine Pressbacke 41 einer ansonsten nicht dargestellten, mehrere derartige Pressbacken aufweisenden Presszange in äußerer Anlage an der Presshülse 36 dargestellt ist. Anstelle des Begriffs "Pressbacke" sind auch die Begriffe "Pressschenkel", "Pressglied" und "Presssegment" geläufig. Anstelle des Begriffs "Presszange" ist auch der Begriff "Presswerkzeug" geläufig. Die Presszange dient zur verpressenden Fixierung der Presshülse 36 auf dem auf den Anschlussstutzen 3 aufgeschobenen MKV-Rohr 2 und damit zur verpressenden Fixierung des MKV-Rohrs 2 auf dem Anschlussstutzen 3.

Die Pressbacken 41 haben der Presshülse 36 zugewandt einen Mittelsteg 42, der auf Höhe der Aufnahmenut 17 an der Presshülse 36 zur Anlage kommt. Der Mittelsteg 42 hat eine Axialerstreckung, die die Aufnahmenut 17 mit den Aufnahmerippen 21 überdeckt. Beabstandet zum Mittelsteg 42 hat jede Pressbacke 41 zwei weitere Seitenstege 43, 44.

In einer ersten Ausbildungsvariante der Pressbacken 41 hat der Mittelsteg eine Gesamtbreite, also eine Axialerstreckung, von 5,7 mm. Die Seiten- bzw. Außenstege 43, 44 haben eine Axialerstreckung von 1,0 mm. Die einander zugewandten Wände der Seitenstege 43, 44 haben einen Abstand zueinander von 15 mm. Es ergibt sich eine Gesamtbreite zwischen den Außenwänden der Seitenstege 43, 44 von 17 mm. Das Verhältnis der Axialerstreckung des Mittelsteges zur Gesamtbreite beträgt also 5,7 zu 17, also in etwa 1:3. Das Verhältnis der Seitenstegbreite zur Gesamtbreite beträgt 1:17.

Bei einer alternativen Dimensionierungsvariante der Pressbacken 41 haben diese eine Gesamtbreite ebenfalls von 17 mm, eine Axialerstreckung des Mittestegs von 5,9 mm, einen Abstand der einander zugewandten Wände der Seitenstege von 14,4 mm und eine Seitenstegbreite bzw.-axialerstreckung von 1,3 mm. Das Verhältnis der Mittelstegbreite zur Gesamtbreite beträgt hier 5,9:17. Das Verhältnis der Seitenstegbreite zur Gesamtbreite beträgt 1,3:17.

Der bundseitige, also einlaufferne Seitensteg 43 liegt in der dargestellten Pressstellung der Pressbacke 41 seitlich an einer Stirnwand 45 des Hülsen-Rastabschnitts 33 des Kunststoff-Halterings 26 an. Der einlaufseitige Seitensteg 44 liegt an der Presshülse 36 in einem Abschnitt an, an den sich unmittelbar einlaufseitig der sich im Durchmesser vergrößernde Bördelabschnitt 37 anschließt. In der Pressstellung der Pressbacke 41 ist die Presszange also zwischen den Kunststoff-Haltering 26 und dem einlaufseitigen Bördelabschnitt 37 der Presshülse 36 geführt.

Zur Aufnahme des Kunststoff-Halterings 26 in der Pressstellung haben die Pressbacken 41 eine Umfangsausnehmung 46. Letztere hat eine Tiefe T, die nur geringfügig größer ist als der radiale Überstand R des Kunststoff-Halterings 26 über die Presshülse 36.

In der Pressstellung der Presszange mit plastisch deformierten Presshülse 36 und plastisch deformiertem MKV-Rohr 2, wie in der Fig. 2a dargestellt, liegt daher bei verpresster Presshülse 36, wenn also die Pressbacken 41 noch ein Stück weit auf die Längsachse 10 zu bewegt wurden, ein Grund 47 der Umfangsausnehmung 46 an einer äußeren Mantelfläche 48 des Kunststoff-Halterings 26 an.

Mit der Fitting-Montagebaugruppe 1 kann ein dichtender Verbund zwischen dem MKV-Rohr 2 und dem Anschlussstutzen 3 folgendermaßen hergestellt werden:

Zunächst wird das Anschlussfitting 4 vormontiert. Der O-Dichtring 20 wird in den Aufnahmeabschnitt 19 des Anschlussstutzens 3 eingelegt. Der Kunststoff-Haltering 26 wird auf den Anschlussstutzen 3 aufgerastet. Da die Rastnut 24 den in Aufrastrichtung verbreiterten äußeren Abschnitt mit Spalt s aufweist, kann der Kunststoff-Haltering 26 beim Aufrasten axial etwas weiter gedrückt werden, als dies ohne den verbreiterten Abschnitt 32 möglich wäre. Dies gewährleistet eine sichere Verrastung des Rastbundes 25 in der Rastnut 24 bei gleichzeitig grundseitig schmal ausgeführter Rastnut 24. Im verrasteten Zustand des Kunststoff-Halterings 26 ist daher ein sicherer Halt von diesem an Anschlussstutzen 3 und ein minimales axiales Spiel des Rastbunds 25 in der Rastnut 24 gewährleistet. Nach dem Aufrasten des Kunststoff-Halterings 26 wird die Presshülse 36 mit dem Bördelabschnitt 35 in die Rastnut 34 des Kunststoff-Halterings 26 eingerastet. Das Anschlussfitting 4 liegt dann in einem vormontierten Zustand vor, in den die Presshülse 36 unverlierbar am Anschlussstutzen 3 gehalten ist.

Das MKV-Rohr 2 liegt zunächst ohne stirnseitige Fase vor. Die Fasenwand 9 wird vor dem Einschieben des MKV-Rohrs 2 in das Anschlussfitting 4 durch ein Anfaswerkzeug durch den Benutzer angebracht. Das Anfaswerkzeug dient gleichzeitig der Beseitigung einer gegebenenfalls vorliegenden Ovalisierung des MKV-Rohrs 2 im zu verpressendem Abschnitt. Eine derartige Ovalisierung kann sich zum Beispiel beim Ablängen des MKV-Rohrs 2 ergeben. Nach dem Anfasen ist das MKV-Rohr 2 im zu verpressenden Abschnitt rund.

Auf der Baustelle wird das MKV-Rohr 2 durch den Benutzer mit der führenden inneren Fasenwand 9 in den hohlzylindrischen Zwischenraum zwischen dem Anschlussstutzen 3 und der Presshülse 36 eingeschoben, bis die Fasenkante 23 an der Anlagewand 22 zu liegen kommt. Die Fasenwand 9 erleichtert das Aufschieben des MKV-Rohrs 2 auf das Einlaufende 11 des Anschlussstutzens 3 sowie das Überschieben des MKV-Rohrs 2 über den O-Dichtring 20. Beim Überschieben des MKV-Rohrs 2 über den O-Dichtring 20 verhindert die seitliche Anlage des O-Dichtrings 20 an der bundseitigen Aufnahmerippe 21, dass der O-Dichtring 20 unerwünscht vom MKV-Rohr 2 mitgenommen wird. In der eingeschobenen Position des MKV-Rohrs 2 verhindert die abgestufte Ausführung des Aufnahmeabschnitts 19 im Nutgrund 18, dass der O-Dichtring 20 sich unerwünscht zur Einlaufseite hin axial verlagert und dabei das MKV-Rohr 2 unerwünscht mitnimmt. Aufgrund der Wahl der Winkel α und β ist eine definierte axiale Anlage des MKV-Rohrs 2 am Anschlussstutzen 3 gewährleistet. Das Ende 8 des MKV-Rohrs 2 wird insbesondere nicht auf die Anlagewand 22 aufgeschoben und nicht durch die Anlage an der Anlagewand 22 aufgeweitet. Die Rippenkanten 16 an den Umfangsrippen 14 sowie an der einen der beiden Aufnahmerippen 21 sichern in dieser Stellung das MKV-Rohr 2 gegen ein unerwünschtes Verlagern gegenüber dem Anschlussstutzen 3.

Nun wird die Presszange mit den Pressbacken 41 entsprechend der Darstellung nach Fig. 2 auf der Presshülse positioniert, wobei die Pressbacken 41 zwischen dem Kunststoff-Haltering 26 und dem einlaufseitigen Bördelabschnitt 37 axial geführt sind. Die Pressbacken 41 sind dann automatisch so positioniert, dass der Mittelsteg 42 axial genau auf Höhe der Aufnahmenut 17 mit den Aufnahmerippen 21 liegt.

Nun erfolgt ein radiales Verpressen der Presshülse 36 und des MKV-Rohrs 2 durch Verlagern der Pressbacken 41 in Richtung auf die Längsachse 10 des Anschlussfittings 4 zu. Die Presszange arbeitet dabei nach Art einer Crimpzange. Die Presshülse 36 und die Metalllage 6 des MKV-Rohrs 2 werden im Bereich der Stege 42 bis 44 plastisch verformt, so dass einerseits im Bereich des Mittelstegs 42 eine sichere Abdichtung des Anschlussstutzens 3 am MKV-Rohr 2 über den O-Dichtring 20 gewährleistet ist und andererseits über die plastische Deformation im Bereich der Seitenstege 43, 44 das MKV-Rohr 2 sicher gegen ein unerwünschtes Abrutschen vom Anschlussstutzen 3 geschützt ist. Dabei greifen die Rippenkanten 16 in das Material der Innenlage 5 ein und wirken als Widerhaken gegen ein solches Herausrutschen. Der O-Dichtring 20 hat in der breiten Aufnahmenut 17 Raum, um sich zum Ausgleich gegen den von außen anliegenden Druck auszuweichen. Fig. 2a zeigt diese verpresste Stellung.

Da während des Verpressens der Grund 47 der Umfangsausnehmung 46 in Anlage an die Mantelfläche 48 des Kunststoff-Halterings 26 über den gesamten Umfang des Kunststoff-Halterings 26 kommt, kann der Kunststoff-Haltering 26, zum Beispiel als Folge eines von innen durch die sich als Folge des Pressvorgangs radial aufweitende Presshülse ausgeübten Drucks nicht radial ausbrechen. Eine undefinierte Deformation des Kunststoff-Halterings 26 wird durch diese Gestaltung der Umfangsausnehmung 46 daher sicher verhindert.

Die vorstehende Beschreibung der Montage und des Einsatzes der Fitting-Montagebaugruppe 1 ist nur exemplarisch zu verstehen. Auch andere Reihenfolgen der beteiligten Verfahrensschritte sind möglich.

Die Fig. 8 und 9 zeigen eine weitere Ausführung einer Fitting-Baugruppe 1. Diese unterscheidet sich von derjenigen nach den Fig. 1 bis 7 lediglich dadurch, dass bei der Ausführung nach den Fig. 8 und 9 die Aufnahmenut 17 ohne einen Aufnahmeabschnitt 19 mit gegenüber dem sonstigen Nutgrund verringertem Durchmesser ausgeführt ist. Die Aufnahmenut 17 hat bei der Ausführung nach den Fig. 8 und 9 also einen Nutgrund mit einheitlichem Durchmesser.

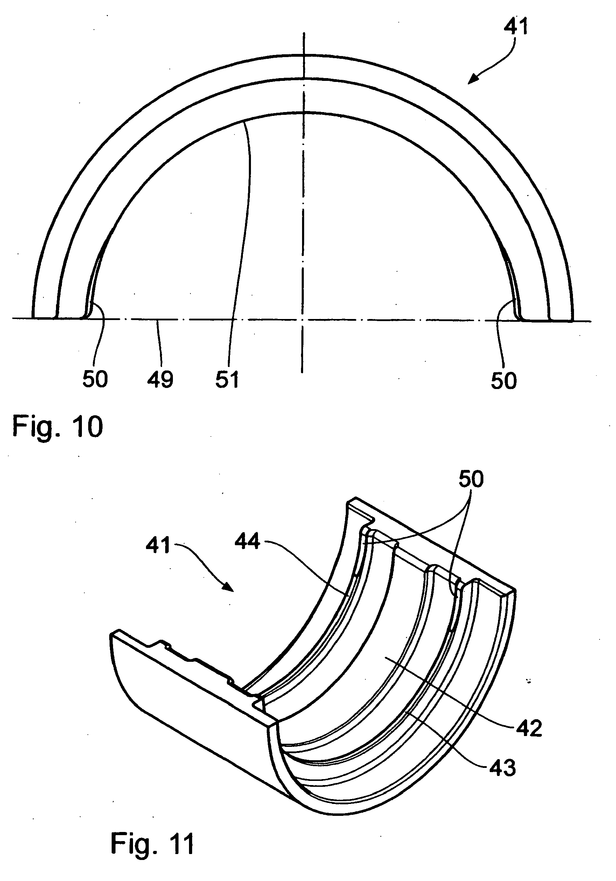

In den Fig. 10 und 11 ist eine der beiden Pressbacken 41 in verschiedenen Maßstäben dargestellt. Die beiden seitlichen Pressstege 43, 44 haben an einem inneren Umfangsabschnitt, der einer Schließebene 49 der Pressstege 42 bis 44 benachbart ist, jeweils eine sich bis zu dieser Schließebene 49 hin erstreckende Umfangsausnehmung 50. Jeder der beiden seitlichen Stege 43, 44 hat also zwei einander gegenüberliegende Umfangsausnehmungen 50. Am Ort der Umfangsausnehmungen vergrößert sich der durch die seitlichen Stege 43, 44 vorgegebene Innendurchmesser der Pressbacke 41 kontinuierlich bis zur Schließebene 49 hin, wobei die Vergrößerung des Innendurchmessers benachbart zur Schließebene 49 maximal einige Zehntelmillimeter, zum Beispiel 0,3 mm beträgt. Auf der der Schließebene 49 angewandten Seite gehen die Umfangsausnehmungen 50 kontinuierlich in eine sonstige innere Mantelwand 51 der seitlichen Pressstege 43, 44 über. Es resultiert ein auch im Bereich der Übergänge zu den Umfangsausnehmungen 50 kanten- und stufenfreier Verlauf der inneren Mantelwand 51.

Beim Verpressen der Presshülse mit den beiden Pressbacken 41 verhindert diese Gestaltung der Umfangsausnehmungen, dass unerwünscht Material der Presshülse 36 zwischen den beiden Pressbacken 41 im Bereich der Schließebene 49 gequetscht wird und den optischen Eindruck der verpressten Rohrverbindung stört.

## Patentansprüche

1. Rohrverbindung
- mit einem Rohr (2) mit einer Innenlage (5) aus Kunststoff,
- mit einem Anschlussfitting (4),
- - mit mindestens einem Anschlussstutzen (3), auf den das Rohr (2) bis zu einem Anschlagbund (22) aufgeschoben ist,
- - mit einer Presshülse (36), die in einer verpressten Stellung das Rohr (2) am Anschlussstutzen (3) sichert,
- wobei das Rohr (2) an seinem führenden, auf den Anschlussstutzen (3) aufgeschobenen Ende (8) eine umlaufende Fasenwand (9) aufweist,
**dadurch gekennzeichnet, dass**
- die Fasenwand (9) mit einer Längsachse (10) des Rohrs (2) einen Winkel α im Bereich zwischen 5° und 20° einschließt,
- der Anschlagbund (22) als schräge Anlagewand (22) ausgeführt ist, die mit einer Längsachse (10) des Anschlussstutzens (3), die mit der Längsachse (10) des Rohrs (2) zusammenfällt, einen Winkel β im Bereich zwischen 30° und 60° einschließt, wobei die Materialien für die Innenlage (5) des Rohrs (2) und für den Anschlussstutzen (3) sowie die beiden Winkel α, β so aufeinander abgestimmt sind, dass eine innere Fasenkante (23) der Innenlage (5) des Rohrs (2) linienförmig umlaufend an der Anlagewand (22) anliegt.

2. Rohrverbindung nach Anspruch 1, **gekennzeichnet durch** einen Fasenwand-Winkel α im Bereich zwischen 10° und 20°.

3. Rohrverbindung nach Anspruch 1 oder 2, **gekennzeichnet durch** einen Anlagewand-Winkel β im Bereich zwischen 30° und 50°.

4. Rohrverbindung nach einem der Ansprüche 1 bis 3, **gekennzeichnet durch** einen Unterschied zwischen den Winkeln α und β im Bereich zwischen 15° und 35°.

5. Rohrverbindung nach Anspruch 4, **gekennzeichnet durch** einen Unterschied von 25° zwischen den Winkeln α und β.

6. Rohrverbindung nach einem der Ansprüche 1 bis 5, **dadurch gekennzeichnet, dass** die Innenlage (5) des Rohrs (2) aus unvernetztem Kunststoff ist.

7. Rohrverbindung nach einem der Ansprüche 1 bis 6, **dadurch** gekenn- zeichnet, dass der radial äußerste Abschnitt der Anlagewand (22) in einer Umfangswulst (27) ausläuft, die gleichzeitig randseitig eine Rastnut (24) zur Aufnahme eines Kunststoff-Halterings (26) für die Presshülse (36) darstellt.

## Claims

1. Pipe connection
- having a pipe (2) with a plastic inner ply (5),
- having a connection fitting (4),
- with at least one connection piece (3) onto which the pipe (2) is pushed as far as a stop collar (22),
- with a pressing sleeve (36) which, in a pressed position, secures the pipe (2) against the connection piece (3),
- wherein the pipe (2), at its leading end (8) which is pushed onto the connection piece (3), has a peripheral chamfered wall (9),
**characterized in that**
- the chamfered wall (9) forms an angle α in the range between 5° and 20° with a longitudinal axis (10) of the pipe (2),
- the stop collar (22) is in the form of an inclined contact wall (22) which forms an angle β in the range between 30° and 60° with a longitudinal axis (10) of the connection piece (3), which coincides with the longitudinal axis (10) of the pipe (2), wherein the materials for the inner ply (5) of the pipe (2) and for the connection piece (3) and also the two angles α, β are matched to each other in such a way that an inner chamfered edge (23) of the inner ply (5) of the pipe (2) bears linearly against the periphery of the contact wall (22).

2. Pipe connection according to Claim 1, **characterized by** a chamfered wall angle α in the range between 10° and 20°.

3. Pipe connection according to Claim 1 or 2, **characterized by** a contact wall angle β in the range between 30° and 50°.

4. Pipe connection according to one of Claims 1 to 3, **characterized by** a difference between the angles α and β in the range between 15° and 35°.

5. Pipe connection according to Claim 4, **characterized by** a difference of 25° between the angles α and β.

6. Pipe connection according to one of Claims 1 to 5, **characterized in that** the inner ply (5) of the pipe (2) is made of noncrosslinked plastic.

7. Pipe connection according to one of Claims 1 to 6, **characterized in that** the radially outermost portion of the contact wall (22) terminates in a circumferential bead (27) which simultaneously represents, on the edge side, a latching groove (24) for receiving a plastic retaining ring (26) for the pressing sleeve (36).

## Revendications

1. Raccord de tuyauterie comprenant :
- un tuyau (2) avec une couche intérieure (5) en plastique,
- une ferrure de raccordement (4),
- avec au moins une tubulure de raccordement (3) sur laquelle le tuyau (2) est poussé jusqu'à un épaulement de butée (22),
- avec une douille de pressage (36), qui, dans une position comprimée, fixe le tuyau (2) contre la tubulure de raccordement (3),
- le tuyau (2) présentant une paroi périphérique biseautée (9) à son extrémité de guidage (8) poussée sur la tubulure de raccordement (3),
**caractérisé en ce que**
- la paroi biseautée (9) forme avec un axe longitudinal (10) du tuyau (2) un angle α dans la plage de 5° à 20°,
- l'épaulement de butée (22) est réalisé sous forme de paroi d'appui oblique (22), qui forme avec un axe longitudinal (10) de la tubulure de raccordement (3), qui coïncide avec l'axe longitudinal (10) du tuyau (2), un angle β dans la plage de 30° à 60°, les matériaux pour la couche intérieure (5) du tuyau (2) et pour la tubulure de raccordement (3) ainsi que les angles α, β étant accordés les uns aux autres de telle sorte qu'une arête biseautée intérieure (23) de la couche intérieure (5) du tuyau (2) s'applique circonférentiellement de manière linéaire contre la paroi d'appui (22).

2. Raccord de tuyauterie selon la revendication 1, **caractérisé par** un angle α de la paroi biseautée dans la plage de 10° à 20°.

3. Raccord de tuyauterie selon la revendication 1 ou 2, **caractérisé par** un angle β de la paroi d'appui dans la plage de 30° à 50°.

4. Raccord de tuyauterie selon l'une quelconque des revendications 1 à 3, **caractérisé par** une différence entre les angles α et β dans la plage de 15° à 35°.

5. Raccord de tuyauterie selon la revendication 4, **caractérisé par** une différence de 25° entre les angles α et β.

6. Raccord de tuyauterie selon l'une quelconque des revendications 1 à 5, **caractérisé en ce que** la couche intérieure (5) du tuyau (2) est en plastique non réticulé.

7. Raccord de tuyauterie selon l'une quelconque des revendications 1 à 6, **caractérisé en ce que** la portion radialement la plus extérieure de la paroi d'appui (22) se termine par un bourrelet périphérique (27), qui constitue simultanément du côté du bord une rainure d'encliquetage (24) pour recevoir une bague de fixation en plastique (26) pour la douille de pressage (36).
